# EUROPÄISCHE PATENTSCHRIFT

(11) **EP 2 580 496 B1**
(45) Veröffentlichungstag und Bekanntmachung des Hinweises auf die Patenterteilung: **02.07.2014**
(21) Anmeldenummer: 11722350.3
(22) Anmeldetag: 04.05.2011
(51) Int. Cl.: F16H 63/30, F16H 63/38, F16H 61/24, F16H 63/20, F16H 61/34, F16H 59/70

(54) **SCHALTEINRICHTUNG**
SHIFTING DEVICE
DISPOSITIF DE CHANGEMENT DE VITESSES

(30) Priorität: 09.06.2010 DE 102010029864
(43) Veröffentlichungstag der Anmeldung: 17.04.2013
(73) Patentinhaber: ZF Friedrichshafen AG, 88038 Friedrichshafen (DE)
(72) Erfinder: ACKER, Andreas, 88074 Meckenbeuren (DE); HOHER, Karlheinz, 88677 Markdorf (DE)
(86) Internationale Anmeldenummer: PCT/EP2011/057113
(87) Internationale Veröffentlichungsnummer: WO 2011/154201

(56) Entgegenhaltungen:
- EP-A1- 2 131 076
- DE-A1-102008 052 139
- DE-U1- 29 923 146
- FR-A1- 2 659 409
- JP-A- 2008 286 346
- KR-A- 20070 036 367

## Beschreibung

Die vorliegende Erfindung betrifft eine Schalteinrichtung für ein Schaltgetriebe eines Fahrzeuges gemäß der im Oberbegriff des Patentanspruches 1 näher definierten Art.

Beispielsweise aus der Druckschrift DE 101 42 225 A1 ist eine Schalteinrichtung für ein Krafttahrzeug-Handschaltgetriebe bekannt. Die bekannte Schalteinrichtung weist eine Schalt- und Wählwelle auf, die im Getriebegehäuse um eine Drehachse zum Ausführen einer Wählbewegung drehbar und zum Ausführen einer Schaltbewegung axial verschiebbar gelagert ist. An der Schalt- und Wählwelle sind Schaltfinger befestigt, die bei einer Drehbewegung nacheinander mit zugeordneten Mitnehmern in Eingriff kommen. Die verschiedenes erforderlichen Mitnehmer sind jeweils an schwenkbaren und drehbaren Schaltschwingen zur Betätigung von zugeordneten Schaltelementen befestigt. Bei der bekannten Schalteinrichtung sind somit in nachteiliger Weise mehrere Mitnehmer und weitere Bauteile erforderlich, um die gewünschten Wähl- und Schaltbewegungen umsetzen zu können.

Aus der FR 2 659 409 A1 ist eine Schalteinrichtung für ein Schaltgetriebe eines Fahrzeuges mit einem Mitnehmerelement, einem Wählhebel, einem Schalthebel und einer zentralen Schalt- und Wählwelle bekannt geworden. Die Bewegungen des Wählhebels und des Schalthebels der Schalteinrichtung sind über das Mitnehmerelement auf die Schalt- und Wählwelle der Schalteinrichtung zum Betätigen von Schaltelementen übertragbar. Der Wählhebel ist mit seinem dem Mitnehmerelement zugewandten Ende zwischen zwei als Funktionsflächen ausgebildeten und zugewandten Wählflächen an dem Mitnehmerelement aufgenommen, so dass eine Wählbewegung des Wählhebels in eine Drehbewegung der mit dem Mitnehmerelement verbundenen zentralen Schalt- und Wählwelle umsetzbar ist. Der Schalthebel ist mit seinem dem Mitnehmerelement zugewandten Ende zwischen zwei als Funktionsflächen ausgebildeten und zugewandten Schaltflächen an dem Mitnehmerelement aufgenommen, so dass eine Schaltbewegung des Schalthebels in eine axiale Bewegung der mit dem Mitnehmerelement verbundenen zentralen Schalt- und Wählwelle umsetzbar ist. Das Mitnehmerelement ist als Multifunktionsbauteil mit mehreren Funktionsflächen zum Ausführen zusätzlicher Funktionen bei einem Wähl- und Schaltvorgang ausgeführt.

Der vorliegenden Erfindung liegt die Aufgabe zu Grunde, eine Schalteinrichtung der eingangs beschriebenen Gattung vorzuschlagen, bei der eine Vielzahl von Funktionen und Aufgaben in einem Bauteil integriert werden, um somit die Anzahl der erforderlichen Bauteile und die Herstellungskosten zu reduzieren.

Diese Aufgabe wird erfindungsgemäß durch die Merkmale des Patentanspruches 1 gelöst, wobei sich weitere vorteilhafte Ausgestaltungen aus den Unteransprüchen und den Zeichnungen ergeben.

Es wird eine Schalteinrichtung für zum Beispiel ein manuelles oder auch ein automatisiertes Schaltgetriebe eines Fahrzeuges vorgeschlagen mit einem Mitnehmerelement, einem Wählhebel, einem Schalthebel und einer zentralen Schaltund Wählwelle, bei der die Bewegungen des Wählhebels und des Schalthebels über das Mitnehmerelement auf die Schalt- und Wählwelle zum Betätigen von Schaltelementen oder dergleichen übertragbar sind, wobei das Mitnehmerelement als Multifunktionsbauteil mit mehreren Funktionsflächen zum Ausführen zusätzlicher erforderlicher Funktionen bei einem Wähl- und Schaltvorgang ausgeführt ist.

Zum Übertragen der Wählkraft des Wählhebels während eines Schaltvorganges ist bei der erfindungsgemäßen Schalteinrichtung vorgesehen, dass der Wählhebel mit seinem dem Mitnehmerelement zugewandten Ende zwischen zwei als Funktionsflächen ausgebildeten und zugewandten Wählflächen an dem Mitnehmerelement aufgenommen ist, so dass eine Wählbewegung des Wählhebels in eine Drehbewegung der mit dem Mitnehmerelement verbundenen zentralen Schalt- und Wählwelle umgesetzt wird.

Eine über den Schalthebel während eines Schaltvorganges aufgebrachte Schaltkraft wird bei der erfindungsgemäßen Schalteinrichtung übertragen, indem der Schalthebel mit seinem dem Mitnehmerelement zugewandten Ende zwischen zwei als Funktionsflächen ausgebildeten und zugewandten Schaltflächen oder dergleichen an dem Mitnehmerelement aufgenommen ist, so dass eine Schaltbewegung des Schalthebels in eine axiale Bewegung der mit dem Mitnehmerelement verbundenen zentralen Schalt- und Wählwelle umgesetzt wird.

Im Rahmen der Erfindung ist vorgesehen, dass Wähl- und Schaltführungsflächen zur Wähl- und Schaltführung vorgesehen sind. Die Wähl- und Schaltführungsflächen sind derart ausgebildet, dass diese quasi das H-Schaltbild im Getriebe abbilden und somit eine entsprechende Führung der Wähl- und Schaltbewegungen ermöglichen. Die Wähl- und Schaltführungsflächen an dem Mitnehmerelement werden durch Seitenflächen mehrerer Vorsprünge realisiert.

Eine Ausführung der Erfindung kann vorsehen, dass zum Ausführen weiterer Funktionen über das Mitnehmerelement an diesem als Funktionsflächen Endanschlagflächen zur mechanischen Begrenzung der Schaltbewegung der zentralen Wähl- und Schaltwelle vorgesehen sind. Dadurch wird eine mechanische Begrenzung bei der Schalteinrichtung durch das Mitnehmerelement realisiert.

Um bei der erfindungsgemäßen Schalteinrichtung eine weitere Funktion in das Mitnehmerelement zu Integrieren, kann an dem Mitnehmerelement als Funktionsfläche zumindest eine erste Zentrierfläche, welche zum Zentrieren des Mitnehmers an der zentralen Wähl- und Schaltwelle verwendet wird, und z.B. auch zumindest eine zweite Zentrierfläche vorgesehen sein, welche zum Zentrieren des Mitnehmerelements an zumindest einer Befestigungsschraube verwendet wird. Somit wird eine zentrierte Verbindung beziehungsweise Aufnahme des Mitnehmerelements an der zentralen Wähl- und Schaltwelle realisiert. Konstruktiv kann dies beispielsweise dadurch ermöglicht werden, dass entsprechende Zentrierflächen in einer zum Beispiel quer zur Längsrichtung der Wähl- und Schallwelle vorgesehenen Ausnehmung oder dergleichen vorhanden sind.

Im Rahmen einer nächsten Weiterbildung der Erfindung kann vorgesehen sein, dass an dem Mitnehmerelement als weitere Funktionsfläche eine Wählrastierfläche und/oder eine Neutralrastierfläche zum irrtegrieren weiterer Funktionen an dem Mitnehmerelement vorgesehen sind. Auf diese Weise wird neben der Wählrastierung auch die Neutralschalter-Rastierung zum Beispiel für eine Start-Stopp-Funktionalität in das Mitnehmerelement aufgenommen, um weitere sonst erforderliche Bauteile einzusparen. Als mögliche konstruktive Ausführungen zum Realisieren der Wählrastierung und der Neutralschalter-Rastierung können an einer vorbestimmten Position des Mitnehmerelements, je nach Anwendungsfall und Anordnung des Neutralschalters und der Wählrastierung, gekrümmte Oberflächen mit einer Vertiefung oder Kerbe vorgesehen sein, um die entsprechenden Rastierungen zu ermöglichen.

Auf diese Weise wird quasi ein Multifunktionsmitnehmer für ein Fahrzeug mit einem manuellen oder automatisierten Schaltgetriebe vorgeschlagen, der mehrere verschiedene Funktionsflächen umfasst, um somit neben der Übertragung von Schalt- und Wählkräften auch zusätzlich andere notwendige Funktionen im Rahmen eines Wähl- und Schaltvorganges zu übertragen beziehungsweise auszuführen. Dadurch werden in vorteilhafter Weise mehrere, z.B. sieben verschiedene Funktionen In einem Bauteile über vorzugsweise neun Funktionsflächen realisiert, so dass dadurch Bauteile entfallen, deren Funktionen von dem Mitnehmer übernommen werden und demzufolge eine Kostenersparnis aufgrund des Entfalls der kostenintensiven Einzelbauteile bewirkt wird. Zudem kann durch die Bündelung mehrerer Funktionen in einem Bauteil eine kurze Toleranzkette realisiert werden, wodurch eine genauere Wähl- und Schaltpositionierung möglich ist. Darüber hinaus ergeben sich aufgrund der Reduzierung der Bauteilanzahl Montagevorteile und eine Bauraumersparnis

Die erfindungsgemäße Schalteinrichtung kann grundsätzlich bei verschiedenen Arten von Schaltgetrieben eingesetzt werden, wobei dann die Anordnungspositionen der vorgesehenen Funktionsflächen entsprechende angepasst werden.

Die vorliegende Erfindung wird anhand der Zeichnungen, welche eine mögliche Ausführungsvariante exemplarisch darstellen, weiter erläutert. Es zeigen:
- Fig. 1: eine schematische, dreidimensionale Ansicht eines möglichen Ausführungsbeispiels einer Anordnung eines Mitnehmerelements In einer Schalteinrichtung eines Schaltgetriebes eines Fahrzeuges;
- Flg. 2: eine schematische, dreidimensionale Einzelteilansicht des Mitnehmerelements gemäß Fig. 1; und
- Fig. 3: eine weitere schematische, dreidimensionale Einzelteilansicht des Mitnehmerelements gemäß Fig. 1.

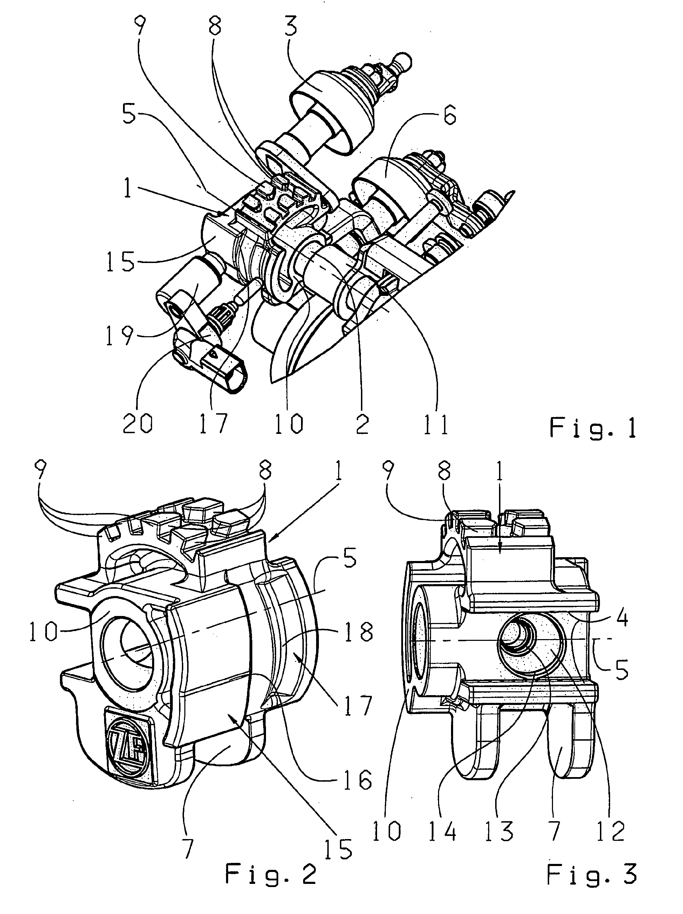

In Fig. 1 ist exemplarisch eine mögliche Ausführungsvariante einer erfindungsgemäßen Anordnung mit einem Mitnehmerelement 1 einer beispielhaft dargestellten Schalteinrichtung für ein Schaltgetriebe eines Fahrzeuges gezeigt.

Das Mitnehmerelement 1 wird als multifunktionales Bauteil einer Schalteinrichtung für ein Fahrzeug mit einem manuellen oder automatisierten Schaltgetriebe eingesetzt, wobei über das Mitnehmerelement 1 mindestens sieben verschiedene Funktionen im Rahmen eines Wähl- und Schaltvorganges realisierbar sind. Dazu weist das Mitnehmerelement 1 mehrere z. B. neun Funktionsflächen auf, um die Wähl- und Schaltbewegungen auf eine zentrale Wähl- und Schaltwelle 2 zu übertragen, die mit zu betätigenden, nicht weiter dargestellten Schaltelementen gekoppelt ist.

Das erfindungsgemäße Mitnehmerelement 1 weist zum Übertragen einer Wählbewegung eines Wählhebels 3 auf die zentrale Wähl- und Schaltwelle 2 als Funktionsflächen ausgebildete Wählflächen 4 auf, die insbesondere in Fig. 3 dargestellt sind. Die Wählflächen 4 sind an einer dem Ende des Wählhebels 3 zugeordneten Seite des Mitnehmerelements 1 derart zueinander beanstandet angeordnet, dass das Ende des Wählhebels 3 zwischen den zugewandten Wählflächen 4 aufgenommen wird, so dass die Wählbewegung des Wählhebels 3 in beide Richtungen übertragen wird. Die Wählbewegungen des Wählhebels 3 bewirken somit eine Drehbewegung des Mitnehmerelements 1 um eine Drehachse 5 der mit dem Mitnehmerelement 1 verbundenen zentralen Wähl- und Schaltwelle 2.

Zum Übertragen einer Schaltbewegung eines Schalthebels 6 der Schalteinrichtung sind als Funktionsflächen zwei Schaltflächen 7 an dem Mitnehmerelement 1 vorgesehen. Die Schaltflächen 7 sind an einer dem Ende des Schalthebels 6 zugewandten Seite des Mitnehmerelements 1 derart zueinander beanstandet angeordnet, dass das Ende des Schalthebels 6 zwischen den zugewandten Schaltflächen 7 aufgenommen wird, so dass die Schaltbewegung des Schalthebels 6 in beide Richtungen übertragen wird. Die Schaltbewegung des Schalthebels 6 bewirkt somit eine axiale Bewegung des Mitnehmerelements 1 bezogen auf die Drehachse 5 der mit dem Mitnehmerelement 1 verbundenen zentralen Wähl- und Schaltwelle 2.

Zur Wähl- und Schaltführung sind an dem Mitnehmerelement 1 Wähl- und Schaltführungsflächen 8 vorgesehen, wie aus den Fig. 1 bis 3 ersichtlich ist. Die Wähl- und Schaltführungsflächen 8 sind an einem bezogen auf die Zeichnungsebene oberen Abschnitt des Mitnehmerelementes 1 vorgesehen. Dazu ist an dem oberen Abschnitt des Mitnehmerelementes 1 eine gekrümmte Oberfläche mit mehreren Vorsprüngen 9 vorgesehen, deren Seitenflächen die Wähl- und Schaltführungsflächen 8 bilden, um die Wähl- und Schaltgassen eines H-Schaltbildes getriebeseitig abzubilden.

Als mechanische Endanschläge für die Schaltbewegung sind an dem Mitnehmerelement 1 als Funktionsflächen Endanschlagsflächen 10 zur mechanischen Begrenzung der axialen Schaltbewegung der zentralen Wähl- und Schaltwelle 2 vorgesehen, wobei zumindest eine der Endanschlagflächen 10 insbesondere in Fig. 2 sichtbar ist. Eine Lagerung der Wähl- und Schaltwelle 2 ist mit 11 bezeichnet.

Wie insbesondere aus Fig. 3 ersichtlich ist, sind zur zentrierten Verbindung beziehungsweise Aufnahme des Mitnehmerelements 1 an der zentralen Wähl- und Schaltwelle 2 eine erste Zentrierfläche 12 und eine zweite Zentrierfläche 13 vorgesehen. Dazu weist das Mitnehmerelement 1 eine quer zur Drehachse 5 der zentralen Wähl- und Schaltwelle 2 verlaufene Ausnehmungen beziehungsweise Bohrung 14 auf, in der die Zentrierfläche 13 vorgesehen ist. Die erste Zentrierfläche 12, parallel zur Drehachse 5, dient zum Zentrieren des Mitnehmers 1 an der Wähl- und Schaltwelle 2, wobei die zweite Zentrierfläche 13 zum Zentrieren des Mitnehmerelements 1 an zumindest einer nicht weiter dargestellten Befestigungsschraube vorgesehen ist.

Um eine Wählrastierung zu realisieren, ist an dem Mitnehmerelement 1 als Funktionsfläche eine Wählrastierfläche 15 vorgesehen. Die Wählrastierfläche 15 wird durch eine gekrümmte Oberfläche an dem Mitnehmerelement 1 realisiert, an der eine zentral, quer zur gekrümmten Fläche verlaufende Vertiefung 16 zum Rastieren der Wählrastierung vorgesehen ist. Die Wählrastierfläche 15 ist an einem der Wählrastierungseinheit 19 zugewandten Abschnitt des Mitnehmerelements 1 ausgebildet.

Darüber hinaus ist an dem Mitnehmerelement 1 zur NeutralschalterRastierung als Funktionsfläche eine Neutralrastierfläche 17 vorzugsweise benachbart zur Wählrastierfläche 15 angeordnet. Die Neutralrastierfläche 17 wird durch eine gekrümmte Oberfläche an dem Mitnehmerelement 1 im Bereich eines dem Neutralschalter 20 zugeordneten Abschnittes mit einer zentral in Krümmungsrichtung verlaufenden Kerbe 18 oder dergleichen ausgebildet. In der Kerbe 18 kann ein Stößel des Neutralschalters 20 entlang der Neutralgasse geführt werden.

Die jeweilige Position der dargestellten Funktionsflächen an dem Mitnehmerelement 1 sind in den Fig. 1 bis 3 nur beispielhaft vorgesehen, da die jeweilige Anordnungsposition der Funktionsflächen in Abhängigkeit der jeweils verwendeten Schalteinrichtung variiert werden kann.

### Bezugszeichen

- 1: Mitnehmerelement
- 2: zentrale Wähl- und Schaltwelle
- 3: Wählhebel
- 4: Wählfläche
- 5: Drehachse
- 6: Schalthebel
- 7: Schaltfläche
- 8: Wähl- und Schaltführungsfläche
- 9: Vorsprung
- 10: Endanschlagsfläche
- 11: Lagerung
- 12: erste Zentrierfläche
- 13: zweite Zentrierfläche
- 14: Ausnehmung
- 15: Wählrastierfläche
- 16: Vertiefung
- 17: Neutralrastierfläche
- 18: Kerbe
- 19: Wählrastierungseinheit
- 20: Neutralschalter

## Patentansprüche

1. Schalteinrichtung für ein Schaltgetriebe eines Fahrzeuges mit einem Mitnehmerelement (1), einem Wählhebel (3), einem Schalthebel (6) und einer zentralen Schalt- und Wählwelle (2), bei der die Bewegungen des Wählhebels (3) und des Schalthebels (6) der Schalteinrichtung über das Mitnehmerelement (1) auf die zentrale Schalt- und Wählwelle (2) der Schalteinrichtung zum Betätigen von Schaltelementen übertragbar sind, und der Wählhebel (3) mit seinem dem Mitnehmerelement (1) zugewandten Ende zwischen zwei als Funktionsflächen ausgebildeten und zugewandten Wählflächen (4) an dem Mitnehmerelement (1) aufgenommen ist, so dass eine Wählbewegung des Wählhebels (3) in eine Drehbewegung der mit dem Mitnehmerelement (1) verbundenen zentralen Schalt- und Wählwelle (2) umsetzbar ist, und der Schalthebel (6) mit seinem dem Mitnehmerelement (1) zugewandten Ende zwischen zwei als Funktionsflächen ausgebildeten und zugewandten Schaltflächen (7) an dem Mitnehmerelement (1) aufgenommen ist, so dass eine Schaltbewegung des Schalthebels (7) in eine axiale Bewegung der mit dem Mitnehmerelement (1) verbundenen zentralen Schalt- und Wählwelle (2) umsetzbar ist, und das Mitnehmerelement (1) als Multifunktionsbauteil mit mehreren Funktionsflächen zum Ausführen zusätzlicher Funktionen bei einem Wähl- und Schaltvorgang ausgeführt ist,
**dadurch gekennzeichnet, dass** an einer gekrümmten Oberfläche des Mitnehmerelementes (1) mehrere Vorsprünge (9) derart angeordnet sind, dass Wähl- und Schaltgassen eines H-Schaltbildes getriebeseitig abgebildet sind, wobei zumindest die den Wähl- und Schaltgassen zugeordneten Seitenflächen der Vorsprünge (9) als Wählund Schaltfiührungsflächen (8) ausgebildet sind.

2. Schalteinrichtung nach Anspruch 1, **dadurch gekennzeichnet, dass** an dem Mitnehmerelement (1) als Funktionsfläche eine Wählrastierfläche (15) zur Rastierung der jeweiligen Wählbewegung vorgesehen ist.

3. Schalteinrichtung nach Anspruch 2, **dadurch gekennzeichnet, dass** als Wählrastierfläche (15) eine gekrümmte Oberfläche an dem Mitnehmerelement (1) mit einer zentralen, quer zur gekrümmten Fläche verlaufenden Vertiefung (16) vorgesehen ist.

4. Schalteinrichtung nach einem der vorangehenden Ansprüche, **dadurch gekennzeichnet, dass** an dem Mitnehmerelement (1) als Funktionsflächen Endanschlagsflächen (10) zur mechanischen Begrenzung der Schaltbewegung der zentralen Wähl- und Schaltwelle (2) vorgesehen sind.

5. Schalteinrichtung nach einem der vorangehenden Ansprüche, **dadurch gekennzeichnet, dass** an dem Mitnehmerelement (1) als Funktionsfläche zumindest eine erste Zentrierfläche (12) zum Zentrieren des Mitnehmerelements (1) an der zentralen Wähl- und Schaltwelle (2) vorgesehen ist.

6. Schalteinrichtung nach Anspruch 5, **dadurch gekennzeichnet, dass** an dem Mitnehmerelement (1) als Funktionsfläche zumindest eine zweite Zentrierfläche (13) zum Zentrieren des Mitnehmerelements (1) an zumindest einer Befestigungsschraube vorgesehen ist.

7. Schalteinrichtung nach Anspruch 6, **dadurch gekennzeichnet, dass** die zweite Zentrierfläche (13) in einer quer zur Drehachse (5) der zentralen Schalt- und Wählwelle (2) verlaufenden Ausnehmung (14) des Mitnehmerelements (1) ausgeführt ist.

8. Schalteinrichtung nach einem der vorangehenden Ansprüche, **dadurch gekennzeichnet, dass** an dem Mitnahmerelement (1) als weitere Funktionsfläche eine Neutralrastierfläche (17) als Rastierung eines Neutralschalters (20) vorgesehen ist.

9. Schalteinrichtung nach Anspruch 8, **dadurch gekennzeichnet, dass** als Neutralrastierfläche (17) eine gekrümmte Oberfläche an dem Mitnehmerelement (1) mit einer zentralen, in Krümmungsrichtung verlaufenden Kerbe (18) vorgesehen ist.

## Claims

1. Shifting device for a gear-shift transmission of a vehicle, with a driver element (1), with a selector lever (3), with a shift lever (6) and with a central shift-and-select shaft (2), in which device the movements of the selector lever (3) and of the shift lever (6) of the shifting device can be transferred via the driver element (1) to the central shift-and-select shaft (2) of the shifting device in order to actuate shift elements, and the selector lever (3) is accommodated, with its end facing the driver element (1), between two selector surfaces (4) on the driver element (1) which are designed as functional surfaces and face one another, so that a selection movement of the selector lever (3) can be converted into a rotational movement of the central shift-and-select shaft (2) connected to the driver element (1), and the shift lever (6) is accommodated, with its end facing the driver element (1), between two shift surfaces (7) on the driver element (1) which are designed as functional surfaces and face one another, so that a shifting movement of the shift lever (6) can be converted into an axial movement of the central shift-and-select shaft (2) connected to the driver element (1), and the driver element (1) is designed as a multifunctional component with a plurality of functional surfaces for implementing additional functions during a selecting and shifting operation, **characterized in that** a plurality of projections (9) are arranged on a curved surface of the driver element (1) in such a way that select-and-shift slots of an H-shift pattern are formed on the transmission side, at least those side surfaces of the projections (9) which are assigned to the select-and-shift slots being designed as select-and-shift guide surfaces (8).

2. Shifting device according to Claim 1, **characterized in that** a selection latching surface (15) for latching the respective selection movement is provided as a functional surface on the driver element (1).

3. Shifting device according to Claim 2, **characterized in that** a curved surface on the driver element (1), with a central depression (16) running transversely to the curved surface, is provided as the selection latching surface (15).

4. Shifting device according to one of the preceding claims, **characterized in that** limit stop surfaces (10) for mechanically limiting the shifting movement of the central select-and-shift shaft (2) are provided as functional surfaces on the driver element (1).

5. Shifting device according to one of the preceding claims, **characterized in that** at least one first centring surface (12) for centring the driver element (1) on the central select-and-shift shaft (2) is provided as functional surface on the driver element (1).

6. Shifting device according to Claim 5, **characterized in that** at least one second centring surface (13) for centring the driver element (1) on at least one fastening screw is provided as a functional surface on the driver element (1).

7. Shifting device according to Claim 6, **characterized in that** the second centring surface (13) is formed in a recess (14) of the driver element (1), the said recess running transversely to the axis of rotation (5) of the central shift-and-select shaft (2).

8. Shifting device according to one of the preceding claims, **characterized in that** a neutral latching surface (17) for latching a neutral shift (20) is provided as a further functional surface on the driver element (1).

9. Shifting device according to Claim 8, **characterized in that** a curved surface on the driver element (1), with a central notch (18) running in the direction of curvature, is provided as the neutral latching surface (17).

## Revendications

1. Dispositif de changement de rapport pour une boîte de vitesses d'un véhicule comprenant un élément d'entraînement (1), un levier de sélection (3), un levier de changement de rapport (6) et un arbre central de changement de rapport et de sélection (2), avec lequel les mouvements du levier de sélection (3) et du levier de changement de rapport (6) du dispositif de changement de rapport peuvent être transmis par le biais de l'élément d'entraînement (1) à l'arbre central de changement de rapport et de sélection (2) du dispositif de changement de rapport en vue d'actionner des éléments de changement de rapport, et le levier de sélection (3) est logé avec son extrémité faisant face à l'élément d'entraînement (1) entre deux surfaces de sélection (4) sur l'élément d'entraînement (1) réalisées en tant que surfaces fonctionnelles et se faisant face, de sorte qu'un mouvement de sélection du levier de sélection (3) peut être converti en un mouvement de rotation de l'arbre central de changement de rapport et de sélection (2) relié avec l'élément d'entraînement (1), et le levier de changement de rapport (6) est logé avec son extrémité faisant face à l'élément d'entraînement (1) entre deux surfaces de changement de rapport (7) sur l'élément d'entraînement (1) réalisées en tant que surfaces fonctionnelles et se faisant face, de sorte qu'un mouvement de changement de rapport du levier de changement de rapport (6) peut être converti en un mouvement axial de l'arbre central de changement de rapport et de sélection (2) relié avec l'élément d'entraînement (1), et l'élément d'entraînement (1) est réalisé sous la forme d'un composant multifonctions doté de plusieurs surfaces fonctionnelles pour accomplir des fonctions supplémentaires lors d'une opération de sélection et de changement de rapport, **caractérisé en ce que** plusieurs parties en saillie (9) sont disposées sur une surface curviligne de l'élément d'entraînement (1) de manière à former du côté de la transmission les voies de sélection et de changement de rapport d'un schéma de changement de rapport en H, au moins les surfaces latérales des parties en saillie (9) qui sont associées aux voies de sélection et de changement de rapport étant réalisées en tant que surfaces de guidage de sélection et de changement de rapport (8).

2. Dispositif de changement de rapport selon la revendication 1, **caractérisé en ce que** sur l'élément d'entraînement (1) est prévue comme surface fonctionnelle une surface à crans de sélection (15) pour le crantage du mouvement de sélection correspondant.

3. Dispositif de changement de rapport selon la revendication 2, **caractérisé en ce que** la surface à crans de sélection (15) prévue est une surface curviligne sur l'élément d'entraînement (1) munie d'un enfoncement (16) central qui s'étend transversalement par rapport à la surface curviligne.

4. Dispositif de changement de rapport selon l'une des revendications précédentes, **caractérisé en ce que** sur l'élément d'entraînement (1) sont prévues comme surfaces fonctionnelles des surfaces de butée finale (10) destinées à la limitation mécanique du mouvement de changement de rapport de l'arbre central de changement de rapport et de sélection (2).

5. Dispositif de changement de rapport selon l'une des revendications précédentes, **caractérisé en ce que** sur l'élément d'entraînement (1) est prévue comme surface fonctionnelle au moins une première surface de centrage (12) destinée à centrer l'élément d'entraînement (1) sur l'arbre central de changement de rapport et de sélection (2).

6. Dispositif de changement de rapport selon la revendication 5, **caractérisé en ce que** sur l'élément d'entraînement (1) est prévue comme surface fonctionnelle au moins une deuxième surface de centrage (13) destinée à centrer l'élément d'entraînement (1) sur au moins une vis de fixation.

7. Dispositif de changement de rapport selon la revendication 6, **caractérisé en ce que** la deuxième surface de centrage (13) est réalisée dans un évidement (14) de l'élément d'entraînement (1) qui s'étend transversalement par rapport à l'axe de rotation (5) de l'arbre central de changement de rapport et de sélection (2).

8. Dispositif de changement de rapport selon l'une des revendications précédentes, **caractérisé en ce que** sur l'élément d'entraînement (1) est prévue comme surface fonctionnelle supplémentaire une surface à crans de point mort (17) faisant office de crantage d'un sélecteur de point mort (20).

9. Dispositif de changement de rapport selon la revendication 8, **caractérisé en ce que** la surface à crans de point mort (17) prévue est une surface curviligne sur l'élément d'entraînement (1) munie d'une encoche (18) centrale qui s'étend dans le sens de la courbure.
